# FASCICULE DE BREVET EUROPEEN

(11) **EP 2 365 192 B1**
(45) Date de publication et mention de la délivrance du brevet: **11.09.2013**
(21) Numéro de dépôt: 10290224.4
(22) Date de dépôt: 28.04.2010
(51) Int. Cl.: F01K 23/06, F01K 13/02, F02G 5/02

(54) **Dispositif de contrôle du fluide de travail circulant dans un circuit fermé fonctionnant selon un cycle de Rankine et procédé pour un tel dispositif**
Vorrichtung und Verfahren zur Regelung eines Arbeitsmittels in einem geschlossenen Rankine-Prozess
Device and method for control of a working fluid in a closed Rankine cycle

(30) Priorité: 13.05.2009 FR 0902316
(43) Date de publication de la demande: 14.09.2011
(73) Titulaire: IFP Energies nouvelles, 92852 Rueil-Malmaison Cedex (FR)
(72) Inventeur: Duparchy, Alexandre, 75018 Paris (FR)

(56) Documents cités:
- US-A- 4 047 005
- US-A- 4 099 489
- US-A1- 2005 072 170

## Description

La présente invention se rapporte à un dispositif de contrôle d'un circuit fermé fonctionnant selon un cycle de Rankine.

Elle concerne plus particulièrement un tel dispositif associé à un moteur à combustion interne, notamment pour véhicule automobile.

Comme cela est largement connu, le cycle de Rankine est un cycle thermodynamique à circuit fermé ayant pour particularité de faire appel à un changement de phase (liquide/vapeur) d'un fluide de travail.

Plus précisément, ce cycle se décompose en quatre étapes, une étape selon laquelle le fluide de travail, sous forme liquide, est comprimé de manière isentropique, suivi d'une étape où le liquide comprimé est chauffé et vaporisé au contact d'une source de chaleur, cette vapeur étant détendue de manière isentropique dans une machine de détente, au cours d'une autre étape, puis le fluide de travail détendu est refroidi et condensé au contact d'une source froide, dans une dernière étape.

Pour réaliser cela, le circuit fermé à cycle de Rankine comprend une pompe volumétrique (ou compresseur) qui comprime un fluide de travail à changement de phase sous forme liquide, qui est généralement de l'eau. Ce liquide traverse un échangeur de chaleur (ou évaporateur) qui est balayé par un fluide chaud. De par l'échange calorifique avec ce fluide chaud, le liquide se vaporise et ressort de l'évaporateur au moins partiellement sous forme vapeur. Cette vapeur traverse ensuite une machine de détente qui transforme l'énergie de cette vapeur en une autre énergie, telle qu'une énergie mécanique. La vapeur détendue qui est issue de la machine de détente parcourt un autre échangeur de chaleur (ou condenseur) grâce auquel la chaleur contenue dans la vapeur est cédée à un fluide froid qui balaye ce condenseur. Après avoir traversé ce condenseur, le fluide de travail est sous forme liquide, forme sous laquelle il est admis dans le compresseur.

Il est notoire que l'efficacité énergétique des moteurs à combustion interne, en particulier ceux utilisés pour des véhicules automobiles, doit être constamment améliorée. Il est donc particulièrement intéressant de se soucier de la récupération des énergies thermiques perdues dans ces moteurs, notamment en vue d'augmenter leurs rendements.

De ce fait et comme cela est mieux décrit dans la demande de brevet français N° 2 884 555, l'une des voies pour récupérer ces énergies perdues consiste à utiliser les gaz d'échappement du moteur à combustion interne pour fournir la source de chaleur nécessaire au chauffage et à la vaporisation du fluide de travail dans le cycle de Rankine. Par cela, une grande partie de l'énergie perdue à l'échappement est récupérée et peut être transformée en une énergie utilisable pour le moteur et/ou le véhicule automobile.

Cependant, une telle configuration de circuit a pour inconvénient majeur d'être limitée dans sa faculté à pouvoir utiliser toute la capacité de l'énergie fournie par la source de chaleur.

Ainsi, le fonctionnement de ce circuit est paramétré à partir de l'énergie calorifique contenue dans les gaz d'échappement sur des points de fonctionnement du moteur de façon à optimiser l'utilisation de cette énergie. Cela a permis de mettre en exergue l'impact de trois paramètres - niveau de pression de la vapeur à l'entrée de la machine de détente (haute pression), niveau de pression de cette vapeur à la sortie de cette machine (basse pression) et débit de la vapeur traversant cette dans cette machine. - qui ont une influence sur l'énergie récupérée au niveau de cette machine de détente.

Cependant, cette optimisation par des paramètres évoluant suivant les points de fonctionnement du moteur conduit à une variation importante de la masse de fluide dans le circuit. En effet, la masse de fluide enfermée dans le circuit évolue à cause de la variabilité du profil de densité au sein des échangeurs. Ainsi, suivant les profils de changement de phase dans l'évaporateur et le condenseur, le fluide de travail occupe plus ou moins de place.

Ceci est d'autant plus pénalisant que l'évolution non désirée de cette masse enfermée à un effet néfaste sur les pressions et le débit de la vapeur appliqués à la machine de détente en les faisant varier d'une manière non contrôlée. Cela a pour conséquence essentielle de minimiser la capacité de récupération de l'énergie calorifique véhiculée par les gaz d'échappement du moteur à combustion interne au niveau de cette machine de détente.

Il est également connu par les documents US2005/072170, US4099489 et US4047005 des circuits fermés dans lequel circule un fluide de travail et comprenant un échangeur de chaleur pour l'évaporation du fluide de travail, des moyens de détente du fluide de travail sous forme vapeur, un échangeur de refroidissement pour la condensation du fluide de travail sous forme vapeur, et une pompe de circulation du fluide sous forme liquide.

Ces circuits ont pour inconvénients majeurs de ne pas pouvoir gérer la masse du fluide de travail qui y circulent ce qui a pour effet, comme précédemment mentionné, de pénaliser les performances des moyens de détente.

La présente invention se propose de remédier aux inconvénients ci-dessus grâce à un dispositif qui permet d'obtenir un rendement maximum sur la récupération des calories de la source chaude et cela quelques soit la variation de la masse de fluide contenue dans le circuit à cycle de Rankine.

A cet effet, la présente invention se rapporte à un dispositif de contrôle du fluide de travail circulant dans un circuit fermé fonctionnant selon un cycle de Rankine, ledit circuit comprenant un échangeur de chaleur pour l'évaporation dudit fluide de travail et balayé par un fluide chaud provenant d'une source chaude, des moyens de détente avec une admission et une évacuation du fluide de travail sous forme vapeur, un échangeur de refroidissement balayé par un fluide froid pour la condensation du fluide de travail sous forme vapeur, et une pompe de circulation et de compression du fluide sous forme liquide, caractérisé en ce qu'il comprend un réservoir de stockage pressurisé de fluide de travail et des moyens de circulation sélectifs du fluide de travail entre ledit réservoir et le circuit comportant deux conduites de circulation de fluide contrôlée par un moyen de vannage, l'une des conduite de circulation de fluide reliant le réservoir à l'entrée de la pompe de circulation et de compression du fluide et l'autre des conduites reliant le réservoir à la sortie de la pompe de circulation et de compression du fluide de manière à introduire du fluide de travail dans ce circuit ou de le retirer de ce circuit pour obtenir le débit souhaité ainsi que les pressions souhaitées à l'admission et à l'évacuation des moyens de détente (30).

La source de chaleur peut provenir des gaz d'échappement d'un moteur à combustion interne.

L'invention concerne également un procédé de contrôle du fluide de travail circulant dans un circuit fermé fonctionnant selon un cycle de Rankine, ledit circuit comprenant un échangeur de chaleur pour l'évaporation dudit fluide de travail et balayé par un fluide chaud provenant d'une source chaude, des moyens de détente avec une admission et une évacuation du fluide de travail sous forme vapeur, un échangeur de refroidissement balayé par un fluide froid pour la condensation du fluide de travail sous forme vapeur, et une pompe de circulation et de compression du fluide de travail sous forme liquide, caractérisé en ce qu'il consiste à modifier la masse du fluide de travail contenu dans ledit circuit en y introduisant du fluide de travail dans le circuit à l'entrée de la pompe de circulation et de compression ou en le retirant dudit circuit à la sortie de la pompe de circulation et de compression pour l'introduire dans un réservoir de stockage pressurisé pour obtenir le débit souhaité ainsi que les pressions souhaitées à l'admission et à l'évacuation des moyens de détente de façon à récupérer le maximum d'énergie provenant de la source chaude.

Le procédé peut consister à ajouter du fluide de travail au fluide déjà contenu dans ledit circuit dans le cas où le débit et/ou les pressions à l'admission et à l'évacuation des moyens de détente sont inférieures à ceux qui sont souhaités.

Le procédé peut consister à ajouter, au fluide de travail déjà contenu dans ledit circuit, du fluide de travail contenu dans un réservoir de stockage.

Le procédé peut consister à soustraire une partie du fluide de travail présent dans le circuit dans le cas où le débit et/ou les pressions à l'admission et à l'évacuation des moyens de détente sont supérieures à ceux qui sont souhaités.

Les autres caractéristiques et avantages de l'invention vont apparaître à la lecture de la description qui va suivre, donnée à titre uniquement illustratif et non limitatif, et à laquelle sont annexées :
- la figure 1 qui montre un dispositif de contrôle d'un circuit fermé fonctionnant selon un cycle de Rankine,
- la figure 2 qui illustre le dispositif de la figure 1 selon une configuration de fonctionnement et
- la figure 3 qui illustre le dispositif de la figure 1 selon une autre configuration de fonctionnement.

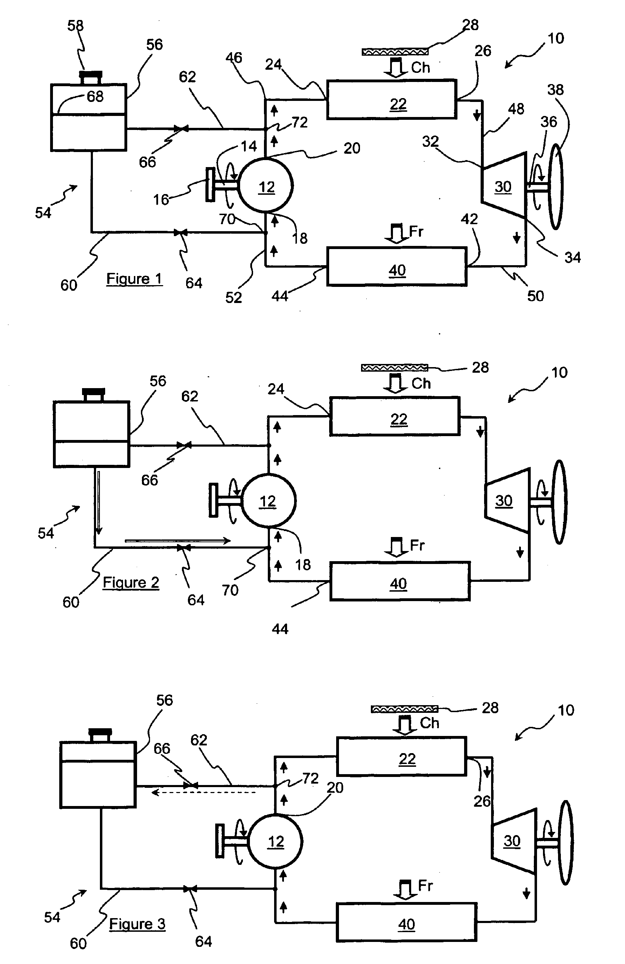

Sur la figure 1, le circuit fermé à cycle de Rankine 10 comprend une pompe de circulation et de compression 12 (ou compresseur) d'un fluide de travail et comportant un arbre de transmission rotatif 14 contrôlé par un organe d'entraînement 16, comme un moteur électrique. Ce compresseur comprend une entrée 18 du fluide de travail sous forme liquide et une sortie 20 de ce fluide de travail également sous forme liquide mais comprimé sous une pression élevée.

Le circuit comporte un échangeur de chaleur 22 (ou évaporateur) traversé par le fluide de travail comprimé entre une entrée 24 de ce fluide liquide et une sortie 26 au travers de laquelle le fluide de travail ressort de cet évaporateur sous forme de vapeur comprimé. Cet évaporateur est balayé par un fluide chaud (symbolisé par la flèche Ch) provenant d'une source de chaleur 28. Cette source de chaleur peut être de tout type, comme un brûleur, un élément radiant ou autre.

Avantageusement et pour la suite de la description, cette source provient des gaz d'échappement d'un moteur à combustion interne et plus particulièrement d'un moteur pour véhicule automobile.

Ce circuit comporte aussi des moyens de détente 30 (ou détendeur) recevant par son admission 32 le fluide de travail sous forme de vapeur comprimée à haute pression et ressortant par son évacuation 34 sous forme de vapeur détendue à basse pression. Ce détendeur comporte un arbre de liaison 36 qui permet de transmettre l'énergie récupérée à tout dispositif transformateur 38, comme par exemple une génératrice électrique reliée à cet arbre et permettant de fournir un courant électrique pour alimenter des batteries.

Ce détendeur peut être de tout type, comme celui sous la forme d'un mécanisme à piston. Dans l'exemple illustré sur les figures, ce détendeur est une turbine de détente comportant un rotor, par exemple de type à ailettes, qui est entraîné en rotation par le fluide de travail sous forme de vapeur.

Le circuit comporte également un échangeur de refroidissement 40 (ou condenseur) avec une entrée 42 pour la vapeur basse pression détendue et une sortie 44 pour le fluide de travail transformé sous forme liquide après son passage dans ce condenseur. Ce condenseur est balayé par un fluide froid (Flèche Fr), généralement de l'air à température ambiante, de manière à refroidir la vapeur détendue pour qu'elle se condense et se transforme en liquide.

Des conduites de circulation de fluide 46, 48, 50 et 52 permettent de relier les différents éléments de ce circuit. Plus précisément, la conduite 46 relie la sortie 20 du compresseur à l'entrée 24 de l'évaporateur, la conduite 48 raccorde la sortie 26 de cet évaporateur à l'admission 32 de la turbine, la conduite 50 établit une liaison entre l'évacuation 34 de la turbine et l'entrée 42 du condenseur et la conduite 52 connecte la sortie 44 du condenseur avec l'entrée 18 du compresseur.

Il est enfin prévu de disposer sur ce circuit des moyens 54 permettant de gérer la masse de fluide qui y est enfermée, notamment en la faisant varier.

Par masse enfermée, il est entendu la masse formée par le fluide sous forme liquide et vapeur dans la totalité du circuit.

Ces moyens comprennent un réservoir pressurisé de stockage 56 de fluide de travail sous forme liquide avec un bouchon taré 58 et des moyens de circulation sélectifs de fluide entre ledit réservoir et le circuit 10. Ces moyens de circulation sélectifs comprennent deux conduites de circulation de fluide 60, 62 portant chacune une vanne 64, 66.

Plus précisément, la conduite 60 avec sa vanne 64 permet de relier la zone du réservoir 56 au dessous de son niveau 68 de fluide liquide à un point de jonction 70 avec la conduite 52 entre la sortie du condenseur et l'entrée du compresseur. La conduite 62 avec sa vanne 66 permet également de relier la zone du réservoir 56 au dessous de son niveau 68 à un autre point de jonction 72 avec la conduite 46 entre la sortie 20 du compresseur 12 et l'entrée 24 de l'évaporateur.

Les vannes 62 et 64 sont commandées par tous moyens connus, comme des moteurs électriques, sous le contrôle d'une unité de calcul et plus particulièrement du calculateur-moteur du moteur à combustion interne.

Ces moyens de gestion de la masse de fluide permettent de pouvoir agir sur le dispositif par l'intermédiaire d'un autre actionneur (masse du fluide) en plus des actionneurs déjà utilisés en relation avec le régime du compresseur et le régime de la turbine.

Pour des raisons de simplification dans la suite de la description, la conduite 60 sera dénommée "conduite amont" en considérant le sens de circulation du fluide du condenseur vers l'évaporateur. Sur ces mêmes bases, la conduite 62 sera dénommée "conduite aval".

Egalement pour des raisons de simplification dans la suite de la description, il sera fait mention de l'eau comme fluide circulant dans ce circuit. Mais, tout autre fluide à changement de phase (liquide/vapeur), y compris les fluides organiques, peut être utilisé.

Sous des conditions normales de fonctionnement, le fluide de travail considéré, ici de l'eau, circule dans le circuit selon un sens horaire. Ainsi, ce fluide sort du compresseur 12 sous forme liquide avec une pression de l'ordre de 80 bars et une température voisine de la température ambiante. Ce liquide est amené par la conduite 46 à l'entrée 24 de l'évaporateur. Il traverse cet évaporateur de manière à se transformer en vapeur sous l'effet du fluide chaud Ch balayant cet évaporateur et provenant de la source 28. La vapeur qui en sort est à environ 500° C avec une pression de l'ordre de 80 bars. Cette vapeur est véhiculée par la conduite 48 et traverse la turbine de détente 30. Par cette traversée, l'énergie transmise à cette turbine par la vapeur permet d'entraîner en rotation l'arbre 36 pour transmettre au dispositif transformateur 38 l'énergie récupérée sur les gaz d'échappement. La vapeur détendue qui sort de la turbine est à une température voisine de 250° C avec une pression proche de la pression atmosphérique. Cette vapeur détendue traverse ensuite le condenseur 40 dans lequel elle subit une étape de transformation de sa phase vapeur en une phase liquide. Le liquide, qui est à pression atmosphérique et à température ambiante, est ensuite amené par la conduite 52 à l'entrée 18 du compresseur 12 pour y être comprimé.

Dans des conditions normales de fonctionnement qui permettent de récupérer le maximum de l'énergie contenue dans le fluide chaud provenant de la source de chaleur 28 constituée par les gaz d'échappement, la turbine 30 est donc traversée par la vapeur selon un débit Q avec une haute pression Ph à son admission 32 et avec une basse pression Pb à son évacuation 34.

Bien entendu, tous les paramètres du circuit pour le débit de vapeur et les pressions (Q, Ph et Pb) sont mesurés par de capteurs (non illustrés sur les figures) contrôlés par le calculateur-moteur et/ou déduits par calcul en relation avec des tables que contient également ce calculateur moteur.

Ainsi en cas d'écart entre le débit et/ou les pressions mesurés et/ou calculés par rapport à des valeurs seuils considérées comme optimales par le contrôle moteur, il est nécessaire d'intervenir sur la masse de fluide enfermée dans le circuit afin d'ajuster le débit Q et/ou les pressions Ph, Pb au plus près des valeurs optimales. En particulier, le fait d'augmenter la masse de fluide contenue dans le circuit permet d'augmenter le débit Q et/ou la pression Pb. En outre, une action complémentaire sur le régime (débit volumique) du compresseur et/ou de la pompe permet d'agir sur l'écart de pression entre Ph et Pb.

Ainsi, dans le cas où la masse de fluide du circuit n'est pas suffisante pour réaliser de la vapeur en sortie de l'évaporateur avec un débit et/ou une pression suffisante pour récupérer le maximum d'énergie de la source 28, le calculateur-moteur contrôle la commande des vannes des moyens de gestion 54 pour que la vanne 66 soit commandée en position de fermeture de la conduite aval alors que la vanne 64 est commandée en position d'ouverture de la conduite amont 60 (figure 2).

Dans cette configuration, le fluide de travail présent dans le circuit continue à y circuler et, sous l'impulsion de l'aspiration au niveau de l'entrée 18 du compresseur 12, une partie du fluide du réservoir est aspiré au travers de la conduite amont 60 (flèches doubles). Ce fluide aspiré parvient au point de jonction 70 et se mélange au fluide de travail déjà présent dans le circuit. Ceci permet d'augmenter la masse de liquide comprise entre la sortie 44 du condenseur et l'entrée 24 de l'évaporateur.

Dés que l'écart entre le débit et/ou les pressions mesurés et/ou calculés par rapport aux valeurs optimales est sensiblement nul, le calculateur-moteur contrôle alors la commande de la vanne 64 pour qu'elle soit commandée en position de fermeture de la conduite amont 60.

Grâce à cela, il est possible d'obtenir la masse désirée de fluide permettant d'avoir le débit souhaité Q de vapeur sous la haute pression Ph voulue à la sortie 26 de l'évaporateur 22.

A l'inverse, si la masse de fluide dans le circuit est en excédent, ceci a pour conséquence de produire à la sortie 26 de l'évaporateur 22 de la vapeur avec un débit trop élevé.

Le calculateur-moteur commande alors la vanne 64 pour qu'elle ferme la conduite amont 60 en y interdisant toute circulation de fluide. Ce calculateur contrôle également la commande de la vanne 66 pour qu'elle soit en position d'ouverture de la conduite aval 62.

Par cela, sous l'effet du refoulement du compresseur en sortie 20, le fluide de travail se partage en deux parties au point de jonction 72. Une grande partie de ce fluide circule dans le circuit et le reste du fluide de travail est dirigé par la conduite aval 62 vers le réservoir 56 dans lequel il est introduit (flèche sous forme de tirets), comme illustré à la figure 3.

De même, dés que l'écart entre le débit et/ou les pressions mesurés et/ou calculés par rapport aux valeurs optimales est sensiblement nul, le calculateur-moteur contrôle alors la commande de la vanne 66 pour qu'elle soit commandée en position de fermeture de la conduite aval 62.

Grâce à cela, il est possible, par une simple intervention sur les vannes, de gérer la masse de fluide de travail contenu dans le circuit et cela à tous moments. Ceci a pour avantage de pouvoir récupérer le maximum d'énergie qui provient de la source chaude pour ensuite la transformer en une autre énergie utilisable rapidement, telle qu'une énergie mécanique, électrique,...

La présente invention n'est pas limitée aux exemples de réalisation décrits ci-dessus mais englobe toutes variantes et tous équivalents couverts par les revendications suivantes.

Notamment, il peut être envisagé d'utiliser le dispositif précité avec un moteur à combustion interne placé sur un véhicule conventionnel ou sur un véhicule hybride.

## Revendications

1. Dispositif de contrôle du fluide de travail circulant dans un circuit fermé (10) fonctionnant selon un cycle de Rankine, ledit circuit comprenant un échangeur de chaleur (22) pour l'évaporation dudit fluide de travail et balayé par un fluide chaud (Ch) provenant d'une source chaude (28), des moyens de détente (30) avec une admission (32) et une évacuation (34) du fluide de travail sous forme vapeur, un échangeur de refroidissement (40) balayé par un fluide froid (Fr) pour la condensation du fluide de travail sous forme vapeur, et une pompe de circulation et de compression (12) du fluide sous forme liquide, **caractérisé en ce qu'**il comprend un réservoir de stockage pressurisé de fluide de travail (56) et des moyens de circulation sélectifs du fluide de travail (60, 64 ; 62, 66) entre ledit réservoir et le circuit (10) comportant deux conduites de circulation de fluide (60, 62) contrôlée par un moyen de vannage (64, 66), l'une (60) des conduite de circulation de fluide reliant le réservoir (56) à l'entrée de la pompe de circulation et de compression du fluide (12) et l'autre (62) des conduites reliant le réservoir (56) à la sortie de la pompe de circulation et de compression du fluide (12) de manière à introduire du fluide de travail dans ce circuit ou de le retirer de ce circuit pour obtenir le débit souhaité ainsi que les pressions souhaitées à l'admission et à l'évacuation des moyens de détente (30).

2. Dispositif de contrôle selon la revendication 1, **caractérisé en ce que** la source de chaleur (28) provient des gaz d'échappement d'un moteur à combustion interne.

3. Procédé de contrôle du fluide de travail circulant dans un circuit fermé (10) fonctionnant selon un cycle de Rankine, ledit circuit comprenant un échangeur de chaleur (22) pour l'évaporation dudit fluide de travail et balayé par un fluide chaud (Ch) provenant d'une source chaude (28), des moyens de détente (30) avec une admission (32) et une évacuation (34) du fluide de travail sous forme vapeur, un échangeur de refroidissement (40) balayé par un fluide froid (Fr) pour la condensation du fluide de travail sous forme vapeur, et une pompe de circulation et de compression (12) du fluide de travail sous forme liquide, **caractérisé en ce qu'**il consiste à modifier la masse du fluide de travail contenu dans ledit circuit en y introduisant du fluide de travail dans le circuit à l'entrée de la pompe de circulation et de compression (12) ou en le retirant dudit circuit à la sortie de la pompe de circulation et de compression (12) pour l'introduire dans un réservoir de stockage pressurisé (56) pour obtenir le débit souhaité ainsi que les pressions souhaitées à l'admission et à l'évacuation des moyens de détente de façon à récupérer le maximum d'énergie provenant de la source chaude.

4. Procédé de contrôle selon la revendication 3, **caractérisé en ce qu'**il consiste à ajouter du fluide de travail au fluide déjà contenu dans ledit circuit dans le cas où le débit et/ou les pressions à l'admission et à l'évacuation des moyens de détente sont inférieures à ceux qui sont souhaités.

5. Procédé de contrôle selon la revendication 4, **caractérisé en ce qu'**il consiste à ajouter, au fluide de travail déjà contenu dans ledit circuit, du fluide de travail contenu dans un réservoir de stockage (56).

6. Procédé de contrôle selon la revendication 3, **caractérisé en ce qu'**il consiste à soustraire une partie du fluide de travail présent dans le circuit dans le cas où le débit et/ou les pressions à l'admission et à l'évacuation des moyens de détente sont supérieures à ceux qui sont souhaités.

## Patentansprüche

1. Vorrichtung zur Kontrolle des Arbeitsfluids, das in einem geschlossenen Kreislauf (10), der nach einem Rankine-Zyklus funktioniert, zirkuliert, wobei der Kreislauf einen Wärmetauscher (22) für die Verdampfung des Arbeitsfluids, der von einem heißen Fluid (Ch), das von einer Wärmequelle (28) kommt, durchströmt wird, Druckminderungsmittel (30) mit einem Einlass (32) und einen Auslass (34) für das Arbeitsfluid in Form von Dampf, einen Kältetauscher (40), der von einem kalten Fluid (Fr) zur Kondensation des Arbeitsfluids in Dampfform durchströmt wird, und eine Umlauf- und Kompressionspumpe (12) für das Fluid in flüssiger Form umfasst, **dadurch gekennzeichnet, dass** sie einen Speicherbehälter unter Druck für das Arbeitsfluid (56) und selektive Zirkulationsmittel für das Arbeitsfluid (60, 64; 62, 66) zwischen dem Behälter und dem Kreislauf (10) besitzt, umfassend zwei Fluidzirkulationsleitungen (60, 62), die durch ein Ventilmittel (64, 66) kontrolliert werden, wobei eine (60) der Fluidzirkulationsleitungen den Behälter (56) mit dem Eingang der Umlauf- und Kompressionspumpe des Fluids (12) verbindet, und die andere (62) der Leitungen den Behälter (56) mit dem Ausgang der Umlauf- und Kompressionspumpe des Fluids (12) verbindet, um Arbeitsfluid in diesen Kreislauf einzuleiten oder es aus diesem Kreislauf zu entnehmen, um die gewünschte Menge sowie den jeweiligen gewünschten Druck am Einlass und am Auslass der Druckminderungsmittel (30) zu erhalten.

2. Kontrollvorrichtung nach Anspruch 1, **dadurch gekennzeichnet dass** die Wärmequelle (28) von den Abgasen eines Verbrennungsmotors stammt.

3. Verfahren zur Kontrolle des Arbeitsfluids, das in einem geschlossenen Kreislauf (10), der nach einem Rankine-Zyklus funktioniert, zirkuliert, wobei der Kreislauf einen Wärmetauscher (22) für die Verdampfung des Arbeitsfluids, der von einem heißten Fluid (Ch), das von einer Wärmequelle (28) kommt, durchströmt wird, Druckminderungsmittel (30) mit einem Einlass (32) und einen Auslass (34) für das Arbeitsfluid in Form von Dampf, einen Kältetauscher (40), der von einem kalten Fluid (Fr) zur Kondensation des Arbeitsfluids in Dampfform durchströmt wird, und eine Umlauf- und Kompressionspumpe (12) für das Fluid in flüssiger Form umfasst, **dadurch gekennzeichnet, dass** es darin besteht, die Masse des in dem Kreislauf enthaltenen Arbeitsfluids zu verändern, wobei Arbeitsfluid in den Kreislauf am Eingang der Umlauf- und Kompressionspumpe (12) eingeleitet oder aus dem Kreislauf am Ausgang der Umlauf- und Kompressionspumpe (12) entnommen wird, um es in einen Speicherbehälter unter Druck (56) einzuleiten, um die gewünschte Menge sowie den jeweils gewünschten Druck am Einlass und am Auslass der Druckminderungsmittel zu erhalten, um ein Maximum an Energie, die von der Wärmequelle kommt, wiederzugewinnen.

4. Kontrollverfahren nach Anspruch 3, **dadurch gekennzeichnet, dass** es darin besteht, Arbeitsfluid zu dem bereits in dem Kreislauf enthaltenen Fluid hinzuzufügen, falls die Menge und/oder der Druck am Einlass und am Auslass der Druckminderungsmittel geringer als gewünscht sind.

5. Kontrollverfahren nach Anspruch 4, **dadurch gekennzeichnet, dass** es darin besteht, zu dem bereits im Kreislauf enthaltenen Arbeitsfluid in einem Speicherbehälter (56) enthaltenes Arbeitsfluid hinzuzufügen.

6. Kontrollverfahren nach Anspruch 3, **dadurch gekennzeichnet, dass** es darin besteht, einen Teil des in dem Kreislauf enthaltenen Arbeitsfluids zu entnehmen, wenn die Menge und/oder der Druck am Einlass und am Auslass der Druckminderungsmittel größer als gewünscht sind.

## Claims

1. A device for controlling the working fluid circulating in a closed circuit (10) operating according to a Rankine cycle, said circuit comprising a heat exchanger (22) for evaporation of said working fluid, swept by a hot fluid (Ch) from a hot source (28), expansion means (30) with an inlet (32) and an outlet (34) for discharging the working fluid in vapour form, a cooling exchanger (40) swept by a cold fluid (Fr) for condensation of the working fluid in vapour form, and a circulation and compression pump (12) for the fluid in liquid form, **characterized in that** it comprises a pressurized working fluid storage tank (56) and selective working fluid circulation means (60, 64 ; 62, 66) between said tank and circuit (10) comprising two fluid circulation lines (60, 62) controlled by a throttling means (64, 66), one (60) of the fluid circulation lines connecting tank (56) to the inlet of fluid circulation and compression pump (12) and the other (62) line connecting tank (56) to the outlet of fluid circulation and compression pump (12) so as to feed working fluid into this circuit or to remove it from this circuit in order to obtain the desired flow rate, as well as the desired pressures at the inlet and at the outlet of expansion means (30).

2. A control device as claimed in claim 1, **characterized in that** heat source (28) comes from the exhaust gas of an internal-combustion engine.

3. A method of controlling the working fluid circulating in a closed circuit (10) operating according to a Rankine cycle, said circuit comprising a heat exchanger (22) for evaporation of said working fluid, swept by a hot fluid (Ch) from a hot source (28), expansion means (30) with an inlet (32) and an outlet (34) for discharging the working fluid in vapour form, a cooling exchanger (40) swept by a cold fluid (Fr) for condensation of the working fluid in vapour form, and a circulation and compression pump (12) for the working fluid in liquid form, **characterized in that** it consists in modifying the mass of the working fluid contained in said circuit by feeding working fluid into the circuit at the inlet of circulation and compression pump (12) or by removing it from said circuit at the outlet of circulation and compression pump (12) so as to feed it into a pressurized storage tank (56) in order to obtain the desired flow rate, as well as the desired pressures at the inlet and at the outlet of the expansion means so as to recover the maximum amount of energy from the hot source.

4. A control method as claimed in claim 3, **characterized in that** it consists in adding working fluid to the fluid already contained in said circuit in cases where the flow rate and/or the pressure values at the expansion means inlet and outlet are below the desired values.

5. A control method as claimed in claim 4, **characterized in that** it consists in adding to the working fluid already contained in said circuit a working fluid contained in a storage tank (56).

6. A control method as claimed in claim 3, **characterized in that** it consists in withdrawing part of the working fluid present in the circuit in cases where the flow rate and/or the pressure values at the expansion means inlet and outlet are above the desired values.
